# EUROPEAN PATENT APPLICATION

(11) **EP 4 760 184 A1**
(43) Date of publication of application: **17.06.2026**
(21) Application number: 25224160.9
(22) Date of filing: 16.12.2025
(51) Int. Cl.: F26B 3/12, B01D 1/18

(54) **SPRAY DRYER DEVICE AND METHOD FOR MONITORING A SPRAY DRYER DEVICE**

(30) Priority: 16.12.2024 EP 24220379
(71) Applicant: Tetra Laval Holdings & Finance S.A., 1009 Pully (CH)
(72) Inventor: Jongsma, Alfred, 8448 GW Heerenveen (NL)
(74) Representative: Tetra Pak Patent Attorneys

(57) **Abstract**

The present invention relates to a spray dryer device (200) with a vessel (202). A spray nozzle (208) is arranged in the vessel (202) for forming a stream of liquid droplets (141) from a liquid material (140). Heated gas is supplied to the vessel (202) to, from the stream of liquid droplets (141), form a particulate material (150) by drying the liquid droplets (141). The device (200) includes a temperature sensor arrangement (120) with spatially distributed temperature sensing elements (122) that sense a spatial temperature distribution at an exterior wall (204) of the vessel (202). A processing device (130) acquires a time series of these temperature distributions and analyzes the time series to determine if fouling (152) of the particulate material (150) has occurred at an inside of the exterior wall (204). If fouling has occurred, the processing device (130) generates a signal indicating a fouling condition within the vessel (202). A method (300) of monitoring a spray dryer device (200) is also disclosed.

## Description

### Technical Field

The invention relates to the field of food production. More particularly, it is related to a spray dryer device. A method for monitoring a spray dryer device is also disclosed.

### Background

In the dairy and food industry spray dryers are commonly used to recover a dissolved or dispersed solid material from a liquid by means of evaporation. In the dairy and food industry, food materials are commonly dissolved in water which is then evaporated to recover the actual food material. To this end, in a spray dryer a liquid feed of a dissolved or dispersed food product is typically atomised to form billions of tiny droplets per second within the spray dryer. The so formed droplets are then contacted by hot gas which supplies the energy required for evaporating the solvent, typically water, resulting in that a powder of the actual food product is formed within the spray dryer.

In order to efficiently produce powder from a dissolved or dispersed food product, the spray dryer must be accurately controlled or else there is a risk the particles of the powder become too moist. When the particles of the powder become too moist there is an outspoken risk that the particles will start to stick to the interior of the spry dryer. As a result, fouling will occur on the inside on the spray dryer. When too many powder particles have accumulated in the spray dryer, the spray dryer must be cleaned. Typically, such cleaning will have to be performed manually, which is timeconsuming and results in undesired and lengthy downtime of the spray dryer.

It is common practice to measure the level of moisture in the powder exiting the spray dryer. Such moisture measurements are typically conducted manually on a regular basis, such as once every hour. However, process variations in a spray dryer typically occur on a much shorter time base meaning that the moisture level of the powder can vary and in a worst case result in a significant fouling of the spray dryer. Since the capacity of the spray dryer is generally utilized close to its maximum, even small process variations in the spray dryer can lead to fouling of the powder in the spray dryer. For instance, a change in weather, such as a passing cold front or the daily temperature cycle, can affect the moisture level of the powder being formed in the spray dryer.

Hence, there is room for improvement when it comes to avoiding fouling in a spray dryer, and consequently when it comes to reducing the need to clean the spray dryer.

### Summary

It is an objective to at least partly overcome one or more of the above-identified limitations of the prior art.

One such objective is to provide a spray dryer device for drying a liquid food material in which fouling conditions are detectable.

Another objective is to provide such a spray dryer device in which fouling conditions are detectable at an early stage.

Another objective is to provide such a spray dryer device that requires less downtime for cleaning.

One or more of these objectives, as well as further objectives that may appear from the description below, are at least partly achieved by a spray dryer device, and a method for monitoring a spray dryer device according to the independent claims, embodiments thereof being defined by the dependent claims.

A first aspect relates to a spray dryer device for drying a liquid material. The liquid material may be liquid food material, a liquid pharmaceutical material or another liquid, chemical material that shall be dried with spray dryer. The device comprises a vessel. A spray nozzle is arranged in the vessel and configured spray the liquid material into the vessel thereby forming a stream of liquid droplets of the liquid material. A gas inlet is configured to supply heated gas to the vessel to, from the stream of liquid droplets, form a particulate material by drying the liquid droplets. A temperature sensor arrangement is arranged at an exterior wall of the vessel. The temperature sensor arrangement comprises a set of spatially distributed temperature sensing elements configured to sense a spatial temperature distribution at the exterior wall. A processing device comprised in the spray dryer device is configured to acquire a time series of temperature distributions from the temperature sensor arrangement. The processing device is configured to analyze the time series of temperature distributions to determine if fouling of the particulate material has occurred at an inside of the exterior wall of the vessel. The processing device is configured to, in response to determining that fouling has occurred, generate a signal indicative of a fouling condition in the vessel.

Hereby an improved spray dryer device is provided.

Herein, "arranged at an exterior wall of the vessel" may mean that the temperature sensor arrangement is arranged on an inside, on an outside, and/or within the exterior wall of the vessel. The temperature sensor arrangement may be arranged directly on the inside, on the outside, and/or within the exterior wall. The temperature sensor arrangement may be arranged indirectly on the inside, on the outside, and/or within the exterior wall. That is, the temperature sensor arrangement may be arranged on one or more objects which in turn are arranged on the inside, on the outside, and/or within the exterior wall.

Herein, a "fouling condition" may mean any condition in the vessel where particles stick to any component of the spray dryer device for an extended period of time. Fouling conditions may include conditions where particles build up in the vessel. Fouling conditions may include conditions where particles build up on the inside of the exterior wall of the vessel, on sensors or components, blockage in gas supply that reduces gas flow and affects drying, overheating which could damage the device or product and pose safety risks, sensor malfunction where faulty sensors provide inaccurate temperature data.

The Applicant has realized that a fouling condition in the vessel may be determined by analyzing a time series of temperature distributions pertaining to the exterior wall of the vessel. More specifically, by acquiring a time series of temperature distributions from a sensor arrangement having a set of spatially distributed temperature sensing elements, a fouling condition in the vessel is detectable by analyzing the time series of temperature distributions, to determine if fouling of the particulate material has occurred at an inside of the exterior wall of the vessel. In this way, a fouling condition in the vessel is detectable at an early stage typically, before moisture tests on the produced particulate material indicates that fouling conditions are at hand. Further, a fouling condition in the vessel is detectable at an early stage typically, before the fouling condition in the vessel is visible when observing the vessel. The spray dryer device will thus enable a reduced downtime since fouling conditions are detectable at an early stage. This because an early detection of a fouling condition in the vessel can generally be compensated for or operation can be stopped prior to the foiling condition in the vessel causes more severe problems resulting in downtime for e.g. cleaning of the spray dryer device including the vessel.

In the following, various embodiments of the first aspect are defined. These embodiments provide at least some of the technical effects and advantages described in the foregoing, as well as additional technical effects and advantages as readily understood by the skilled person, for example in view of the following detailed description.

In some embodiments, the processing device may be configured to analyze the time series of temperature distributions to determine if fouling of the particulate material has occurred at an inside of the exterior wall of the vessel by; determining, from the time series of temperature distributions, for each temperature sensing element, a local temporal variation of the temperature readings of the respective temperature sensing element, and detecting whether any one of the local temporal variations falls below a local temperature variation threshold.

Herein, a "local temporal variation" may be any temporal variation of the temperature readings of a temperature sensing element. Such local temporal variation may have any cause and may emanate from fouling at an inside of the exterior wall of the vessel at a location of the sensing element. Moreover, such local temporal variation may emanate from a change in moisture level in the particulate material, a variation of a rate of hot gas fed to the vessel, a variation of heat supplied stream of liquid droplets of the liquid material and hence to the vessel, a variation in the type or quality of the stream of liquid droplets of the liquid material to give a few non-limiting examples.

In some embodiments, the processing device may be configured to analyze the time series of temperature distributions to determine if fouling of the particulate material has occurred at an inside of the exterior wall of the vessel by; determining, from the time series of temperature distributions, for each temperature distribution an average temperature value, determining a global temporal variation of the average temperature values, and detecting if the global temporal variation of the average temperature values falls below an average temperature variation threshold.

Herein, a "global temporal variation" may be any temporal variation of the of the average temperature values of the temperature distributions. Such global temporal variation may have any cause and may emanate from fouling at an inside of the exterior wall of the vessel at locations of the temperature sensor arrangement. Moreover, such global temporal variation may emanate from a change in moisture level in the particulate material, a variation of a rate of hot gas fed to the vessel, a variation of heat supplied stream of liquid droplets of the liquid material and hence to the vessel, a variation in the type or quality of the stream of liquid droplets of the liquid material to give a few non-limiting examples.

In some embodiments, the local temporal variation and/or the global temporal variation may be a statistical temporal variation.

In some embodiments, the local temporal variation and/or the global temporal variation may comprise a standard deviation, a variance, a variation in rate, a variation in magnitude, a variation in frequency, a pattern-wise variation, a trend-wise variation, a volatility or an anomaly in temperature change.

In some embodiments, a first subset of the temperature sensing elements may be arranged on an inside of the exterior wall, and a second subset of the temperature sensing elements may be arranged on an outside of the exterior wall.

In some embodiments, the processing device may be configured to analyze the time series of temperature distributions to determine if fouling of the particulate material has occurred at an inside of the exterior wall of the vessel by; determining, for a temperature distribution, from temperature readings pertaining to the first subset of the temperature sensing elements, an inside average temperature value, and from temperature readings pertaining to the second subset of the temperature sensing elements, an associated outside average temperature value, and detecting if a difference between the inside average temperature value and the associated outside average temperature value falls below a temperature difference threshold.

In some embodiments, the processing device may be configured to analyze the time series of temperature distributions to determine if fouling of the particulate material has occurred at an inside of the exterior wall of the vessel by; determining, for each temperature distribution, from temperature readings pertaining to the first subset of the temperature sensing elements, an inside average temperature value, and from temperature readings pertaining to the second subset of the temperature sensing elements an associated outside average temperature value, and detecting if any difference between any one of the inside average temperature values and an associated outside average temperature value falls below a temperature difference threshold.

In some embodiments, the spray dryer device may further comprise an outlet temperature sensor arranged at an gas outlet of the vessel, the outlet temperature sensor being configured to sense a temperature of gas exiting the vessel via the gas outlet.

In some embodiments, the processing device may be further configured to, for a temperature distribution, acquire an outlet temperature reading from the outlet temperature sensor associated with the temperature distribution, and wherein the processing device may be configured to analyze the time series of temperature distributions to determine if fouling of the particulate material has occurred at an inside of the exterior wall of the vessel by; determining for the temperature distribution associated with the outlet temperature reading an average temperature value, and detecting if a difference between the average temperature value and the associated outlet temperature reading falls below an outlet temperature difference threshold.

In some embodiments, the processing device may be further configured to, for each temperature distribution, acquire an outlet temperature reading from the outlet temperature sensor associated with the temperature distribution, and wherein the processing device may be configured to analyze the time series of temperature distributions to determine if fouling of the particulate material has occurred at an inside of the exterior wall of the vessel by; determining, from the time series of temperature distributions, for each temperature distribution a respective average temperature value, and detecting if a difference between any one of the average temperature values and a respective associated outlet temperature reading falls below an outlet temperature difference threshold.

In some embodiments, the temperature sensor arrangement may comprise a fiber Bragg grating.

In some embodiments, the temperature sensor arrangement may comprise a first fiber Bragg grating extending along a first path at an inside of the exterior wall and a second fiber Bragg grating extending along a second path at an outside of the exterior wall.

In some embodiments, the processing device may be further configured to adapt a control parameter of the spray dryer device in response to receiving the signal.

Herein, a "control parameter" may be any parameter used to control the operation of the spray dryer device. Thus, adaptation of a control parameter may include adaptation of various parameters including but not limited to, adjusting an gas flow supplied to the vessel to correct moisture levels, modifying a temperature of gas supplied to the vessel, modifying a temperature setting of one or more heating elements to maintain optimal processing conditions, altering a feed rate of the liquid material to ensure consistent material flow into vessel, and adjusting an gas outlet temperature.

In some embodiments, the particulate material may be milk powder or baby formula.

A second aspect relates to a method for monitoring a spray dryer device. The device comprises a vessel. A spray nozzle is arranged in the vessel and configured spray the liquid material into the vessel thereby forming a stream of liquid droplets of the liquid material. A gas inlet is configured to supply heated gas to the vessel to, from the stream of liquid droplets, form a particulate material by drying the liquid droplets. A temperature sensor arrangement is arranged at an exterior wall of the vessel. The temperature sensor arrangement comprises a set of spatially distributed temperature sensing elements configured to sense a spatial temperature distribution at the exterior wall. The method comprises acquiring, by a processing device, a time series of temperature distributions from the temperature sensor arrangement. The method comprises analyzing, by the processing device, the time series of temperature distributions to determine if fouling of the particulate material has occurred at an inside of the exterior wall of the vessel, and in response to the processing device detecting that fouling has occurred, generating, by the processing device, a signal indicative of a fouling condition in the vessel.

In general, features of this second aspect provide similar advantages as discussed above in relation to the first aspect. Consequently, said advantages will not be repeated in order to avoid undue repetition.

In some embodiments, the method may further comprise adapting, by the processing device, a control parameter of the spray dryer device in response to receiving the signal.

### Drawings

Embodiments of the invention will now be described, by way of example, with reference to the accompanying schematic drawings, in which
Fig. 1 schematically illustrates a system for forming and drying powder including a spray dryer device and a fluid bed device.
Fig. 2a is a graph illustrating averaged temperatures of temperature sensing elements arranged at an inside of an exterior wall of a spry dryer, when the spray dryer is fed with water, versus time.
Fig. 2b is a graph illustrating averaged temperatures of the temperature sensing elements arranged at the inside of the exterior wall of a spry dryer, when the spray dryer is fed with a liquid product while maintaining a gas outlet temperature of 73 degrees Celsius, versus time.
Fig. 2c is a graph illustrating averaged temperatures of the temperature sensing elements arranged at the inside of an exterior wall of a spry dryer, when the spray dryer is fed with the liquid product while maintaining a gas outlet temperature of 68 degrees Celsius, versus time.
Fig. 3a is a graph illustrating averaged temperatures of temperature sensing elements arranged at an outside of an exterior wall of a spry dryer, when the spray dryer is fed with water, versus time.
Fig. 3b is a graph illustrating averaged temperatures of the temperature sensing elements arranged at the outside of the exterior wall of a spry dryer, when the spray dryer is fed with a liquid product while maintaining a gas outlet temperature of 73 degrees Celsius, versus time.
Fig. 3c is a graph illustrating averaged temperatures of the temperature sensing elements arranged at the inside of an exterior wall of a spry dryer, when the spray dryer is fed with the liquid product while maintaining a gas outlet temperature of 68 degrees Celsius, versus time.
Fig. 4a is a graph illustrating average temperature values of the temperature sensing elements arranged at the inside of the exterior wall of a spry dryer versus gas outlet temperature, as well as average temperature values of the temperature sensing elements arranged at the outside of the exterior wall of a spry dryer versus gas outlet temperature.
Fig. 4b is a graph illustrating, for different gas outlet temperatures, temperature differences between the average temperature values of the temperature sensing elements arranged at the inside of the exterior wall of a spry dryer and the average temperature values of the temperature sensing elements arranged at the outside of the exterior wall of a spry dryer.
Fig. 5 schematically illustrates the heat transfer through the exterior wall of the spray dryer with and without the influence of fouling.
Fig. 6 is a schematic flowchart of a method for monitoring a spray dryer device.
Fig. 7 is a cross-sectional view of an embodiment of a sensor-sandwich arrangement, mounted to the exterior wall of the spray dryer and having a separation element in between two sensor arrays.

### Description

Embodiments will now be described more fully hereinafter with reference to the accompanying drawings, in which some, but not all, embodiments are shown. Indeed, the subject matter of the present disclosure may be embodied in many different forms and should not be construed as limited to the embodiments set forth herein; rather, these embodiments are provided so that this disclosure may satisfy applicable legal requirements.

Where possible, any of the advantages, features, functions, devices, and/or operational aspects of any of the embodiments described and/or contemplated herein may be included in any of the other embodiments described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "at least one" or "one or more", even though the phrase "one or more" or "at least one" is also used herein. The terms "multiple", "plural" and "plurality" are intended to imply provision of two or more elements. The term "and/or" includes any and all combinations of one or more of the associated listed elements. Although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure.

Well-known functions or constructions may not be described in detail for brevity and/or clarity. Unless otherwise defined, all terms (including technical and scientific terms) used herein have the same meaning as commonly understood by one of ordinary skill in the art to which this disclosure belongs.

Like reference numerals refer to like elements throughout.

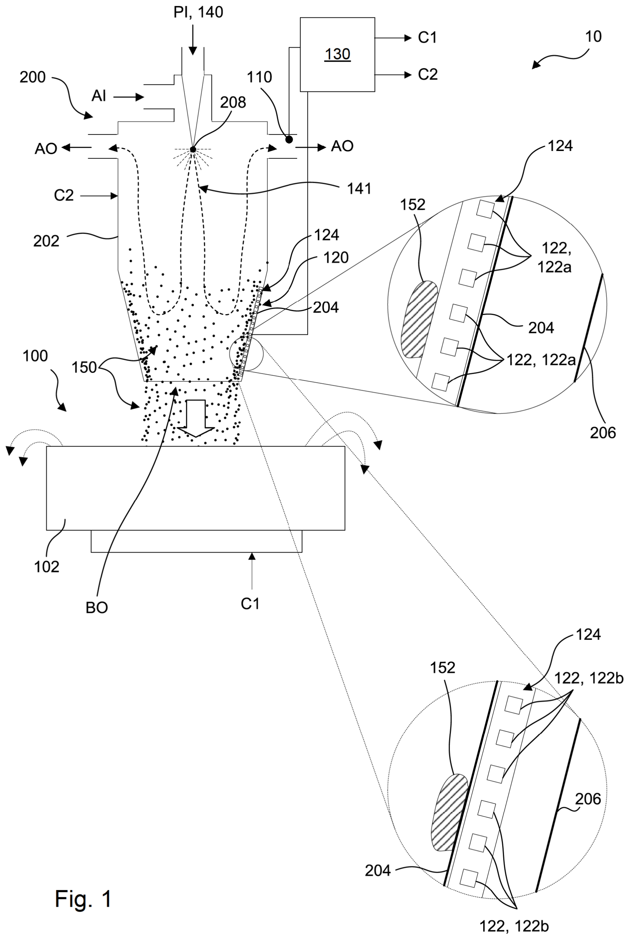

Fig. 1 is a schematic overview of an example system 10 for forming and drying powder 150. The system 10 includes a spray dryer device 200 or spray dryer 200. The spray dryer 200 is used to form a particulate material 150 from a liquid product 140, which is fed to the spray dryer 200. The particulate material 150 may be a particulate food material and the liquid product 140 may be a liquid food product, such as milk, In the following, the system, the spray dryer and related methods are described in connection with a particulate food material and a liquid food product.

The formed particulate food material is formed in form of powder 150. Thus, if milk is fed to the spray dryer 200, a milk powder 150 will be formed in the spray dryer 200. In general terms, the spray dryer 200 of Fig. 1 is configured to form a particulate food material 150 from a liquid food material being 140 fed to the spray dryer 200.

The spray dryer 200 comprises a vessel 202. The vessel 202 of the spray dryer 200 has a general cylindrical shape and a tapering section at its lower part. The tapering section may also be referred to as a conical section. A lower end of the vessel 202 is open such that formed particulate food material 150 may fall out of the vessel 202 through the open lower end by means of gravity. The open lower end may also be referred to as a bottom outlet BO. In Fig. 1 it is schematically indicated by a large arrow how produced powder 150 falls out of the vessel 202 through the bottom outlet BO an into the vessel 102 of the fluid bed device 100.

The spray dryer 200 comprises a spray nozzle 208. The spray nozzle 208 is arranged in the vessel 202. More specifically, the spray nozzle 208 is arranged at an upper portion of the vessel 202. The spray nozzle 208 is configured to spray a liquid food material 140, or liquid food product 140, into the vessel 202. In this way a stream of liquid droplets 141 of the liquid food material 140 is formed by means of the spray nozzle 208. To this end, the liquid food material 140 is fed to the spray nozzle 208 via a product inlet PI. The product inlet PI may as illustrated in Fig. 1 be located at the top of the vessel 202 above the spray nozzle 208. Typically, the liquid food material 140 is pumped into the product inlet PI at a high pressure, e.g. by means of a pump.

Further, a gas inlet Al is provided at the upper portion of the vessel 202. The gas inlet Al is configured to supply heated gas to the vessel 202. Herein, the gas is air, but any other gas may be used, as long as it is suitable to be used for the liquid material that is spray dried. As illustrated in Fig. 1, the gas inlet Al may introduce heated gas into the vessel 202 slightly above spray nozzle 208. The general purpose of supplying heated gas into the vessel 202 via the gas inlet is to form the particulate food material 150 from the stream of liquid droplets 141 by drying the liquid droplets 141.

The depicted spray dryer 200 of Fig. 1 is of a co-current type. The co-current type of spray dryer 200 is the most common type of spray dryer 200 in the dairy and food industry. In this type of spray dryer 200 a stream of hot gas and liquid droplets 141 are allowed to flow downwards within the vessel 202 of the spray dryer 200. More specifically a stream of hot gas and liquid droplets 141 in the form of a two-phase jet is allowed to flow downwards within the vessel 202. Near the bottom outlet BO of the vessel the stream of hot gas reverses its path and flows upwards towards one or more gas outlets AO or gas exhausts, as schematically indicated by dashed arrows in Fig. 1. In the depicted spray dryer 200 of Fig. 1, a gas outlet AO is provided on either side at the top portion of the vessel 202. In this way, the powder 150 is formed from the liquid food product 140 while the stream of hot gas and liquid droplets 141 travels as schematically indicated by the dashed arrows in Fig. 1. The produced powder 150 will to some extent follow the path of the stream of hot gas. However, a major portion of the powder 150 will separate from the flow of hot gas. The powder particles that have separated from the stream of hot gas will in general temporarily form deposits on the interior of the lower tapering section of the vessel 202 or will fall directly out of the spray dryer trough the bottom outlet BO.

Relevant examples of particulate food material 150 include milk powder and baby formula. However, other types of particulate food material 150 are also conceivable.

The system 10 of Fig. 1 further includes a fluid bed device 100. The fluid bed device 100 is shown in a side view just below the spray dryer 200. The fluid bed device 100 comprises a vessel 102. The vessel 102 of the depicted fluid bed device 100 is formed like an open tray 102. The vessel 102 is configured to receive the particulate food material 150 from the spray dryer 200. To this end, the particulate food material 150 is allowed to fall into the vessel 102 by means of gravity. The fluid bed device 100 is configured to fluidize the particulate food material 150. The fluid bed device 100 is further configured to dry the particulate food material 150. Fluid bed devices 100 are known in the art and will consequently not be described in greater detail here.

The system 10 of Fig. 1 further includes a processing device 130. According to examples, the processing device 130 may include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). The processing device 130 may be cloud based or implemented in the cloud.

The processing device 130 is configured to control the fluid bed device 100, e.g. by means of control signals C1. This is schematically indicated in Fig. 1 by the arrows marked C1. Further, the processing device 130 may receive feedback or measurements from sensors, actuators or similar of the fluid bed device 100.

The processing device 130 is further configured to control the spray dryer 200, e.g. by means of control signals C2. This is schematically indicated in Fig. 1 by the arrows marked C2. Further, the processing device 130 may, according to an example, receive feedback or measurements from sensors, actuators or similar of the spray dryer 200. This will be discussed in greater detail further below.

The above described parts and functions of the system 10 are commonly used in the food industry for producing particulate food material 150. However, the present Applicant has identified a potential problem with the system 10 as described above. More specifically, the Applicant has identified that it is difficult and sometimes even impossible to realize that the operating conditions of the spray dryer device 200 differs from what can be regarded as normal operating conditions before significant problems related to fouling within the vessel 202 of the spray dryer 200 have already occurred. In other words, the Applicant has realized that it is difficult and sometimes even impossible to, at an early stage, realize when fouling conditions are at hand in the vessel 202.

In this regard, the Applicant has realized that is may be difficult to realize when the particulate food material 150 start to build up on the inside of the exterior wall 204 of the vessel 202 thereby fouling 152 the inside of the exterior wall 204. The Applicant has further realized that it might be difficult and sometimes even impossible to see that the particulate food material 150 present in the vessel 202 is about to go from what may be regarded a normal stat to a state in which the particulate food material 150 present in the vessel 202 builds up fouling 152 on the inside of the exterior wall 204 of the vessel. In other words, the applicant has realized that when fouling 152 of the particulate food material 150 present in the vessel 202 is clearly visible, significant problems, typically leading to undesired downtime and cleaning, have already occurred and cannot easily be avoided or accounted for.

After significant experimentation, the Applicant has found an effective solution that may observe and detect the above identified fouling related problems at an early stage or even before fouling of the inside of the exterior wall 204 occurs. Thus, the Applicant has found a solution which may solve or at least mitigate the above identified fouling related problems. The solution involves acquisition of a time series of temperature distributions at the exterior wall 204 of the vessel 202. The solution further involves analyzing the time series. To this end, the Applicant proposes modifying the system 10 to include a temperature sensor arrangement 120 arranged at an exterior wall 204 of the vessel 202, where the temperature sensor arrangement 120 comprises a set of spatially distributed temperature sensing elements 122, as well as modifying the functionality of the processing device 130. More specifically, the Applicant proposes to modify the processing device 130 such that the processing device 130 is configured to acquire a time series of temperature distributions from the temperature sensor arrangement 120 and to analyze the time series of temperature distributions to determine if fouling 152 of the particulate food material 150 has occurred at an inside of the exterior wall 204 of the vessel 202. Moreover, the Applicant proposes to modify the processing device 130 such that the processing device 130 is configured to, in response to determining that fouling 152 has occurred, generate a signal indicative of a fouling condition in the vessel 202.

In the following, configurations of such a temperature sensor arrangement 120 will be described. Thereafter it will be described how such a temperature sensor arrangement 120 may be utilized to observe and detect the above identified fouling related problems at an early stage by means of the processing device 130.

Now returning to Fig. 1. The spray dryer device 200 of Fig. 1 further comprises a temperature sensor arrangement 120 arranged at an exterior wall 204 of the vessel 202. The temperature sensor arrangement 120 comprises a set of spatially distributed temperature sensing elements 122. As best illustrated in the upper enlarged view of Fig. 1, the spatially distributed temperature sensing elements 122 are arranged at a distance from each other. In this way, the temperature sensor arrangement 120 is configured to sense a spatial temperature distribution. More specifically, the temperature sensor arrangement 120 is configured to sense a spatial temperature distribution at the exterior wall 204. To this end, a spatial temperature distribution comprises a temperature reading of each temperature sensing element 122 of the temperature sensor arrangement 120.

As illustrated in the upper enlarged view of Fig. 1, the set of spatially distributed temperature sensing elements 122 may be arranged on an inside of the exterior wall 204. Thus, the set of spatially distributed temperature sensing elements 122 may be arranged the in the vessel 202. Hence, the set of spatially distributed temperature sensing elements 122 may in this way be in direct contact with particulate food material 150 present in the vessel 102. Such direct contact between the set of spatially distributed temperature sensing elements 122 and the particulate food material 150 allows for a quick and direct response as the temperature of the particulate food material 150 changes at one or more of the temperature sensing elements 122. As a result, fouling 152 of the particulate food material 150 at a location of the set of spatially distributed temperature sensing elements 122 may be determined quickly since fouling 152 at the location of the set of spatially distributed temperature sensing elements 122 will affect how heat is transferred to the temperature sensing elements 122 from the interior of the vessel 202. In the enlarged views of Fig. 1, it is schematically illustrated how fouling 152 has occurred at the location of the second and third temperature sensing elements 122 as counted from the bottom.

Alternatively, or optionally, the set of spatially distributed temperature sensing elements 122 may be arranged on an outside of the exterior wall 204 of the vessel 202 as illustrated in the lower enlarged view of Fig. 1. In this way, the sensing elements 122 may be prevented, or protected from directly contacting the particulate food material 150 present in the vessel 202. Further, in this way, the sensing elements 122 may be protected from being contaminated by the particulate food material 150. As a result, the risk of the sensing elements 122 failing or otherwise becoming less accurate over time may be reduced. In other words, more robust measurements may be achieved over time when the set of spatially distributed temperature sensing elements 122 is arranged on the outside of the exterior wall 204 of the vessel 202. Further, the need for cleaning the sensing elements 122 may be eliminated or significantly reduced.

As illustrated in the enlarged views of Fig. 1, the outer wall 204 of the vessel 202 may be formed as a dual wall in which the outer wall 204 of the vessel 202 is complemented by a cladding wall 206, or second outer wall 206, located outside of the outer wall 204. In such a case, the cladding wall 206 may be located 50-80 mm from the outer wall 204 such that a space is formed in between the outer wall 204 and the cladding wall 206. The space between the outer wall 204 and the cladding wall 206 may in practice be filled or at least partially filled with thermal insulation material to reduce undesired heat losses across the dual wall 204, 206. As illustrated in the lower enlarged views of Fig. 1, the spatially distributed temperature sensing elements 122 may be arranged on an outside of the exterior wall 204 but on an inside of the cladding wall 206. In other words, the spatially distributed temperature sensing elements 122 may be arranged between the exterior wall 204 and the cladding wall 206.

Further setups of the temperature sensor arrangement 120 and its spatially distributed sensing elements 122 are, however, feasible. For instance, some sensing elements 122a of the spatially distributed sensing elements 122 may be arranged on the inside of the exterior wall 204 of the vessel 202 whereas other sensing elements 122b of the spatially distributed sensing elements 122 may be arranged on the outside of the exterior wall 204 of the vessel 202, i.e. as illustrated in Fig. 1 when considering both enlarged views jointly. In other words, a first subset 122a of the set of spatially distributed temperature sensing elements 122 may be arranged on an inside of the exterior wall 204, and a second subset 122b of the temperature sensing elements 122 may be arranged on an outside of the exterior wall 204.

Further setups of the temperature sensor arrangement 120 and its spatially distributed sensing elements 122 may, however, be contemplated.

The depicted temperature sensor arrangement 120 of Fig. 1 comprises a fiber Bragg grating 124. It is however to be understood that any type of suitable temperature sensor arrangement 120 may be used in the spray dryer device 200. As is known in the art, a fiber Bragg grating 124 can be compared with a mirror that reflects a certain wavelength and transmits all others. By providing a plurality of such mirrors at welldefined distances, the reflected wavelengths may be controlled with very high accuracy. According to an example, such mirrors can be provided equidistantly, for a uniform fiber Bragg grating 124, or can be provided with varying distances along a grating length, resulting in a chirped fiber Bragg grating 124 where the reflected wavelength changes along the grating. The basic principle of measuring temperature with fiber Bragg gratings 124 is that the reflected wavelength depends on the grating characteristics, such as period and modulation, and is influenced by ambient conditions such as temperature. This allows for fiber Bragg gratings 124 to act as sensors for temperature. Further, when utilizing a fiber Bragg grating 124 as temperature sensors an accurate system with short response times may be realized.

In the depicted spray dryer device 200, as illustrated in Fig. 1, the temperature sensor arrangement 120, i.e. the fiber Bragg grating 124, extends along a linear path. It is, however, to be understood that the temperature sensor arrangement 120, i.e. the fiber Bragg grating 124, may extend along a curved path or a path of arbitrary shape.

Moreover, the temperature sensor arrangement 120 may optionally comprise more than one fiber Bragg grating 124, i.e. as illustrated in Fig. 1 when considering both enlarged views jointly.

In other words, the temperature sensor arrangement 120 may comprise a first fiber Bragg grating 124 extending along a first path and a second fiber Bragg grating 124 extending along a second path. For instance, a first fiber Bragg grating 124 may be arranged on the inside of the exterior wall 204, and a second fiber Bragg grating 124 may be arranged on the outside the exterior wall 204 of the vessel 202. However, more than one fiber Bragg grating 124 may be arranged on the inside of the exterior wall 204. Similarly, more than one fiber Bragg grating 124 may be arranged on the outside of the exterior wall 204. By arranging a desired number of fiber Bragg gratings 124 in a tailored way, the characteristics and response of the temperature sensor arrangement 120 may be tailored e.g. to suit different needs or desires.

For example, a first path of a first fiber Bragg grating 124 may be a linear path. Correspondingly, a second path of a second fiber Bragg grating 124 may be a linear path. Correspondingly, a third path of a third fiber Bragg grating 124 may be a linear path.

According to an example, as illustrated in Fig. 1, a first subset 122a of the set of spatially distributed temperature sensing elements 122 may be comprised in a first fiber Bragg grating 124 which is arranged on the inside of the exterior wall and extends along a liner path within the vessel 202. Further, as illustrated in Fig. 1, a second subset 122b of the set of spatially distributed temperature sensing elements 122 may be comprised in a second fiber Bragg grating 124, which is arranged on the outside of the exterior wall 204 and extends along a liner path outside of the vessel 202.

The spray dryer device 200 may as illustrated in Fig. 1 further comprise an outlet temperature sensor 110. Such outlet temperature sensor 110 may as illustrated in Fig. 1 be arranged at a gas outlet AO of the vessel 202. In this way, the outlet temperature sensor 110 may sense the temperature of the gas exiting the vessel 202 through the gas outlet AO. In other words, the depicted outlet temperature sensor 110 is configured to sense a temperature of gas exiting the vessel 202 via the gas outlet AO.

As will be described below, different approaches or strategies may be employed to analyze an acquired time series of temperature distributions from the temperature sensor arrangement 120 to determine if fouling 152 of the particulate food material 150 has occurred at the inside of the exterior wall 204 of the vessel 202. All approaches described below starts with the processing device 130 acquiring a time series of temperature distributions from the temperature sensor arrangement 120.

The Applicant has realized that an efficient way to detect a fouling condition in the vessel 202 is to detect whether any one of a series of local temporal variations falls below a local temperature variation threshold. Thus, in accordance with an approach, the processing device 130 may be configured to analyze the time series of temperature distributions to determine if fouling 152 of the particulate food material 150 has occurred at an inside of the exterior wall 204 of the vessel 202 according to the following.

Subsequent to acquiring the time series of temperature distributions from the temperature sensor arrangement 120, the processing device 130 may determine, from the time series of temperature distributions, for each temperature sensing element 122, a local temporal variation of the temperature readings of the respective temperature sensing element 122. Thus, the processing device 130 may determine how the temperature fluctuates over time for each one of the temperature sensing elements 122.

Subsequent to determining the local temporal variations, the processing device 130 may detect whether any one of the local temporal variations falls below a local temperature variation threshold. In this regard, a decreased local temperature variation is a clear indication that fouling 152 has occurred at the location of the temperature sensing element 122 in question. This because fouling 152 located at the location of a temperature sensing element 122 will act as a thermal insulator which will inhibit a local temperature variation. Put differently, fouling 152 located at the location of a temperature sensing element 122 will act as a thermal insulator which will slow down temperature changes, thus inhibiting any rapid temporal variation at the location of the fouling 152.

To this end, such local temporal variation may comprise standard deviation, a variance, a variation in rate, a variation in magnitude, a variation in frequency, a pattern-wise variation, a trend-wise variation, a volatility or an anomaly in temperature change.

According to an example, the local temporal variations may be represented in the form of a respective standard deviation. In such a case, the local temperature variation threshold may be a standard deviation which, e.g. through experimentation, has been determined to represent a situation where fouling 152 has occurred at the relevant temperature sensing element 122. In other words, the local temperature variation threshold may be a standard deviation which corresponds to a fouling condition in the vessel 202.

The Applicant has further realized that an efficient way to detect a fouling condition in the vessel 202 is to detect whether any one of a series of average temperature values AT falls below an average temperature variation threshold. Thus, in accordance with an approach, the processing device 130 is configured to analyze the time series of temperature distributions to determine if fouling 152 of the particulate food material 150 has occurred at an inside of the exterior wall 204 of the vessel 202 according to the following.

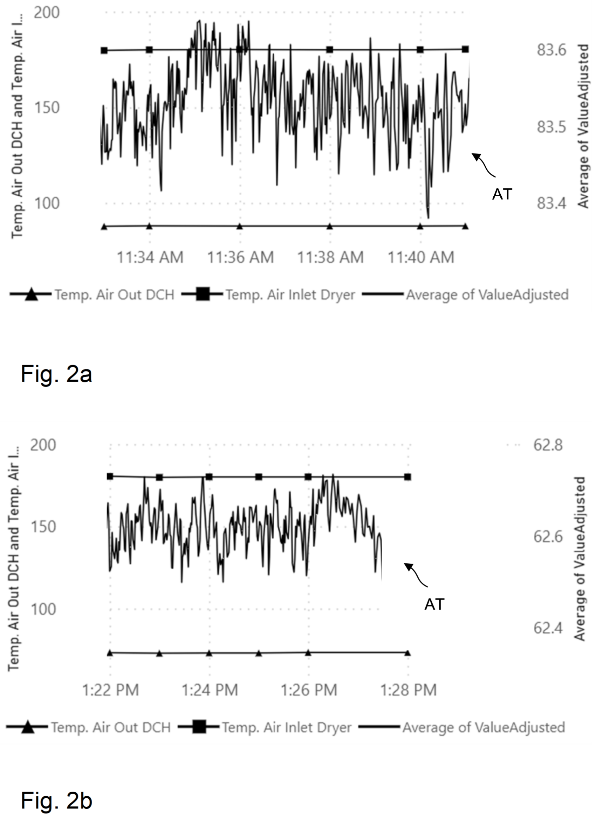

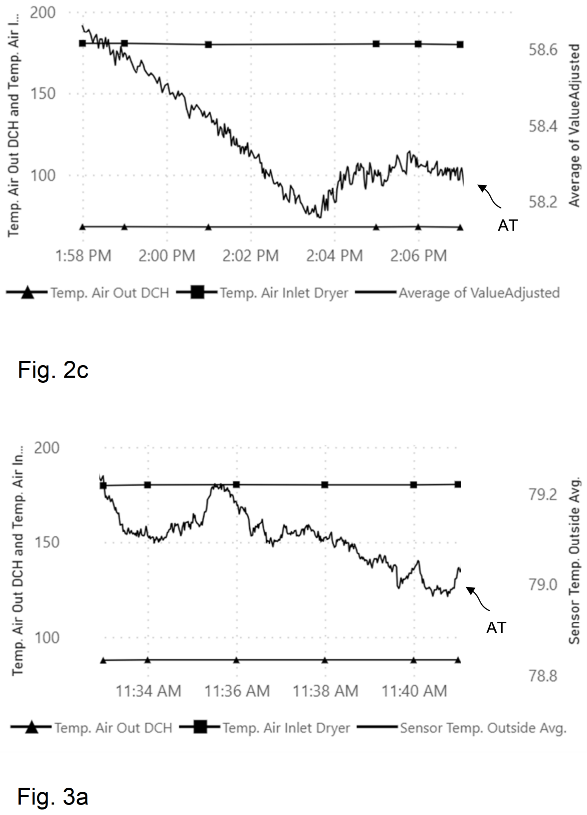

Subsequent to acquiring the time series of temperature distributions from the temperature sensor arrangement 120, the processing device 130 may determine, from the time series of temperature distributions, for each temperature distribution an average temperature value AT. Thus, an average temperature value AT (single value) may be determined for each temperature distribution of the temperature distributions of the time series. In other words, a single average temperature value AT may be determined for each point in time of the time series of temperature distributions. Such average temperature values AT are plotted for different situations and setups versus time in Figs. 2a-2c and Figs. 3a-3c, to which reference is now made.

Subsequent to determining the average temperature values AT, the processing device 130 may determine a global temporal variation of the average temperature values AT. Thus, the processing device 130 may determine on a global level how the temperature fluctuates over time for the temperature sensing elements 122.

Subsequent to determining the global temperature variation, the processing device 130 may detect if the global temporal variation falls below an average temperature variation threshold. In this regard, a decreased global temperature variation is a clear indication that fouling 152 has occurred at the location of one or more of the temperature sensing elements 122. This because fouling 152 located at the location of one or more temperature sensing elements 122 will act as a thermal insulator which will inhibit temperature variation. Put differently, fouling 152 located at the location of one or more temperature sensing elements 122 will act as a thermal insulator which will slow down temperature changes, thus inhibiting any temporal variation at the location of the fouling 152.

To this end, such global temporal variation may comprise standard deviation, a variance, a variation in rate, a variation in magnitude, a variation in frequency, a pattern-wise variation, a trend-wise variation, a volatility or an anomaly in temperature change.

According to an example, the global temporal variation may be represented in the form of a standard deviation. In such a case, the average temperature variation threshold may be a standard deviation which, e.g. through experimentation, has been determined to represent a situation where fouling 152 has occurred at the temperature sensing elements 122. In other words, the average temperature variation threshold may be a standard deviation which represents a fouling condition in the vessel 202.

The above approach will herein below be discussed in detail while referring to Figs. 2a-2c and Figs. 3a-3c. It is to be noted that the approach first described is similar meaning that the below description is also relevant for further understanding the approach first described.

Figs. 2a-2c all illustrates how the average temperature values AT for a respective time series of temperature distributions varies over time. Further, the average temperature values AT of Figs. 2a-2c are all pertaining to a temperature sensor arrangement 120 arranged on the inside of the exterior wall 204 of the vessel 202, i.e. as depicted in the upper enlarged view of Fig. 1. Moreover, in Figs. 2a-2c the temperature of the heated gas supplied to the vessel 202 via the gas inlet Al is 180 degrees Celsius.

Fig. 2a illustrates how the average temperature values AT for a time series of temperature distributions varies for a period of time of about eight minutes. In Fig. 2a, water is supplied to the spray nozzle 208 at a rate maintaining the temperature of the gas exiting the vessel 202 through the gas outlet AO of the vessel 202 at about 90 degrees Celsius. In this regard, the processing unit 130 may control the feed rate of the water to the spray nozzle 208 by reading out the temperature of the gas exiting the vessel 202 through the gas outlet AO by the outlet temperature sensor 110. Thus, in Fig. 2a, no liquid food product 140 is supplied to the vessel 202 but just water. This means that there will be no formation of a particulate food material 150 with the result that no fouling 152 will occur. Hence, Fig, 2a is provided to illustrate how the average temperature values AT for a time series of temperature distributions acquired at the inside of the exterior wall 204 varies for a period of time when no fouling 152 has occurred at an inside of the exterior wall 204 of the vessel 202. It may be observed that the average temperature values AT varies stochastically within a range of slightly more than 0,2 degrees Celsius.

Fig. 2b illustrates how the average temperature values AT for a time series of temperature distributions varies for a period of time of about six minutes. In Fig. 2b, a liquid food material 140, e.g. milk, is supplied to the spray nozzle 208 at a rate maintaining the temperature of the gas exiting the vessel 202 through the gas outlet AO of the vessel 202 at 73 degrees Celsius. In this regard, the processing device 130 may control the feed rate of the liquid food material 140 to the spray nozzle 208 by reading out the temperature of the gas exiting the vessel 202 through the gas outlet AO by the outlet temperature sensor 110. When gas exiting the vessel 202 through the gas outlet AO of the vessel 202 has a temperature of 73 degrees Celsius, a moisture level in the produced powder 150 will be about 4%. It may be observed that the average temperature values AT varies stochastically within a range of slightly more than 0,2 degrees Celsius in Fig. 2b like in Fig. 2a. The fact that the behavior of how the average temperature values AT varies in Fig. 2b is similar to the behavior of how the average temperature values AT varies in Fig. 2a is indicative of that no or just an insignificant fouling 152 occurs at the inside of the exterior wall 204 of the vessel 202. Hence, Fig, 2b is also provided to illustrate how the average temperature values AT for a time series of temperature distributions acquired at the inside of the exterior wall 204 varies for a period of time when no fouling 152 has occurred at an inside of the exterior wall 204 of the vessel 202.

Fig. 2c illustrates how the average temperature values AT for a time series of temperature distributions varies for a period of time of about nine minutes. In Fig. 2c, the same type of liquid food material 140 as in Fig. 2b is supplied to the spray nozzle 208 at a rate maintaining the temperature of the gas exiting the vessel 202 through the gas outlet AO of the vessel 202 at 68 degrees Celsius. In this regard, the processing unit 130 may control the feed rate of the liquid food material 140 to the spray nozzle 208 by reading out the temperature of the gas exiting the vessel 202 through the gas outlet AO by the outlet temperature sensor 110. When gas exiting the vessel 202 through the gas outlet AO of the vessel 202 has a temperature of 68 degrees Celsius, a moisture level in the produced powder 150 will be about 6%. It may be observed that the average temperature values AT are no longer varying stochastically. At the conditions prevailing in the vessel 202 for Fig. 2c, it may be observed that the average temperature values AT are slowly decaying for the first five minutes

After about five minutes (at about 2:04 PM) a controller of the spray dryer device 200 decides to delimit the flow of the liquid food material 140 too abruptly for the decaying trend of the first five minutes to proceed as otherwise would have been expected. Given this, the first five minutes are more interesting from a perspective of determining if fouling 152 of the particulate food material 150 has occurred at an inside of the exterior wall 204 of the vessel 202. Hence, during the first five minutes the average temperature values AT are slowly decaying about 0,4 degrees Celsius. More importantly, the temporal fluctuations are significantly lower than in Figs. 2a and 2b. As is clear from Fig. 2c, the temporal fluctuations, that is the global temporal variation of the average temperature values AT are in Fig. 2c significantly lower and typically within 0,05 degrees Celsius.

The significantly lower global temporal variation of the average temperature values AT and the slow decay of the average temperature values AT are attributable to the fact that fouling 152 is slowly building up at the inside of the exterior wall 204 of the vessel 202 and consequently on the sensor arrangement 120 which is present in the vessel 120. In this regard, it is to be noted that the spray dryer 200 is deliberately run under fouling conditions in Fig. 2c, i.e. where the moisture level in the produced powder 150 is about 6%. Hence, Fig, 2c is provided to illustrate how the average temperature values AT for a time series of temperature distributions acquired at the inside of the exterior wall 204 varies for a period of time when fouling 152 accumulates at the inside of the exterior wall 204 of the vessel 202.

Figs. 3a-3c all illustrates how the average temperature values AT for a respective time series of temperature distributions varies over time. Further, the average temperature values AT of Figs. 3a-3c are all pertaining to a temperature sensor arrangement 120 arranged on the outside of the exterior wall 204 of the vessel 202, i.e. as depicted in the lower enlarged view of Fig. 1. Moreover, in Figs. 3a-3c the temperature of the heated gas supplied to the vessel 202 via the gas inlet Al is 180 degrees Celsius, like in Figs. 2a-2c.

Fig. 3a illustrates how the average temperature values AT varies for the same time period as in Fig. 2a. Thus, in Fig. 3a, no liquid food product 140 is supplied to the vessel 202 but just water. This means that there will be no formation of a particulate food material 150 with the result that no fouling 152 will occur. Hence, Fig, 3a is provided to illustrate how the average temperature values AT for a time series of temperature distributions acquired at the outside of the exterior wall 204 varies for a period of time when no fouling 152 is present. It may be observed that the average temperature values AT varies more or less stochastically within a range of slightly more than 0,2 degrees Celsius.

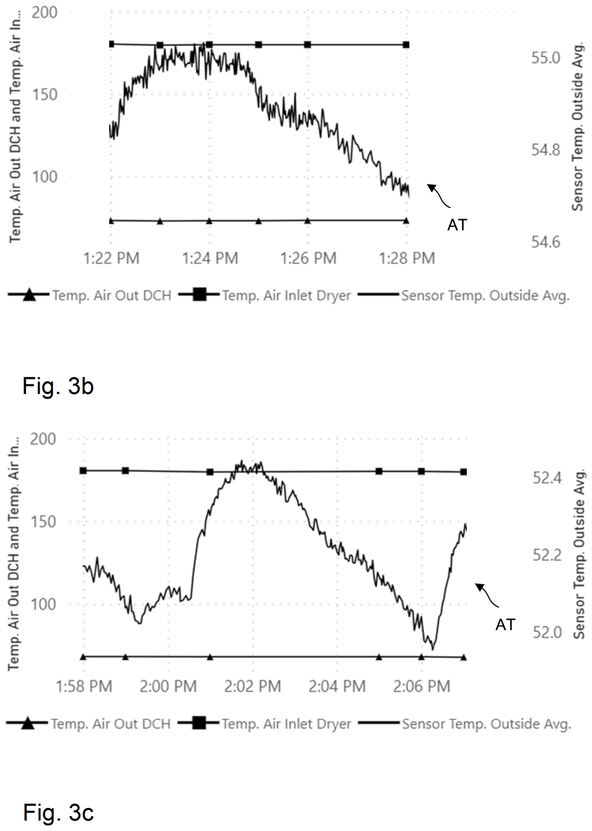

Fig. 3b illustrates how the average temperature values AT varies for the same time period as in Fig. 2b. Thus, in Fig. 3b, the liquid food product 140 is supplied to the vessel 202 as have been described above. Hence, Fig, 3b is also provided to illustrate how the average temperature values AT for a time series of temperature distributions acquired at the outside of the exterior wall 204 varies for a period of time when no or just an insignificant fouling 152 occurs at the inside of the exterior wall 204 of the vessel 202. It may be observed that the average temperature values AT varies within a range of slightly more than 0,3 degrees Celsius.

Fig. 3c illustrates how the average temperature values AT varies for the same time period as in Fig. 2c. Thus, in Fig. 3c, the liquid food product 140 is supplied to the vessel 202 as have been described above. Hence, Fig, 3c is provided to illustrate how the average temperature values AT for a time series of temperature distributions acquired at the outside of the exterior wall 204 varies for a period of time when fouling 152 occurs at the inside of the exterior wall 204 of the vessel 202. It may be observed that the temporal fluctuations are significantly lower than in Figs. 3a and 3b. As is clear from Fig. 3c, the temporal fluctuations, that is the global temporal variation of the average temperature values AT are in Fig. 3c significantly lower as compared to in Figs. 3a and 3b.

The Applicant has further realized that an efficient way to detect a fouling condition in the vessel 202 is to detect if a difference D, d between an inside average temperature value IAT and an associated outside average temperature value OAT falls below a temperature difference threshold TDT. Hence, in this regard, a first subset 122a of the temperature sensing elements 122 is to be arranged on an inside of the exterior wall 204, and a second subset 122b of the temperature sensing elements 122 is to be arranged on the outside of the exterior wall 204, i.e. as illustrated in Fig. 1 when considering the enlarged views of Fig. 1 jointly. Thus, in accordance with an approach, the processing device 130 may be configured to analyze the time series of temperature distributions to determine if fouling 152 of the particulate food material 150 has occurred at an inside of the exterior wall 204 of the vessel 202 according to the following.

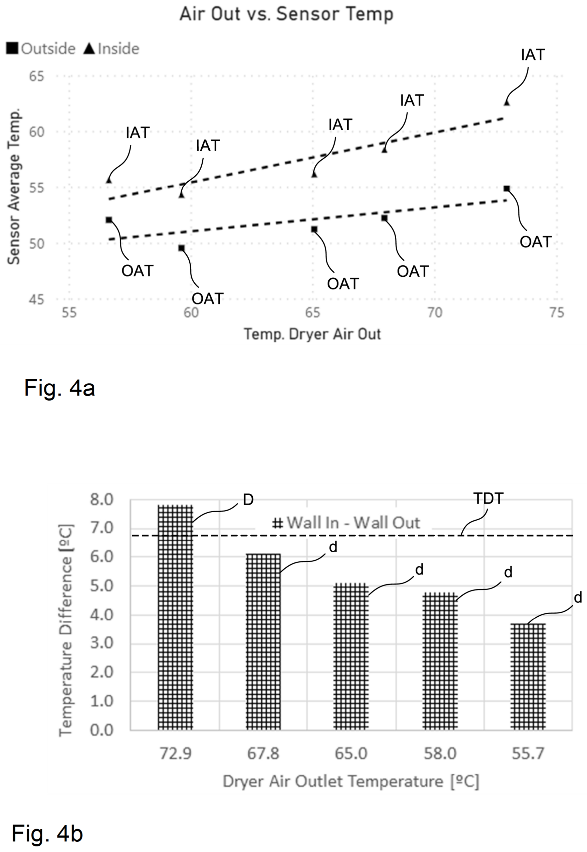

Subsequent to acquiring the time series of temperature distributions from the temperature sensor arrangement 120, the processing device 130 may determine, for a temperature distribution, from temperature readings pertaining to the first subset 122a (inside of the exterior wall 204) of the temperature sensing elements 122, an inside average temperature value IAT. Correspondingly, the processing device 130 may determine, for a temperature distribution, from temperature readings pertaining to the second subset 122b (outside of the exterior wall 204) of the temperature sensing elements 122 an associated outside average temperature value OAT. Thus, the processing device 130 may determine for one and the same temperature distribution an inside average temperature value IAT and an outside average temperature value OAT. Such inside average temperature values IAT and an outside average temperature values OAT are plotted in Fig. 4a for different temperature distributions pertaining to different temperatures of the gas exiting the vessel 202 through the gas outlet AO of the vessel 202. More specifically, inside average temperature values IAT and an outside average temperature values OAT are plotted in Fig. 4a for temperature distributions pertaining to the temperatures of 55,7, 58,0, 65,0, 67,8 and 72,9 respectively for the gas exiting the vessel 202 through the gas outlet AO of the vessel 202.

Moreover, a linear fit of the inside average temperature values IAT for the respective temperatures of the gas exiting the vessel 202 through the gas outlet AO is plotted with a hatched line in Fig. 4a.

Correspondingly, a linear fit of the outside average temperature values OAT for the respective temperatures of the gas exiting the vessel 202 through the gas outlet AO is plotted with a hatched line in Fig. 4a.

Subsequent to determining an inside average temperature value IAT and an outside average temperature value OAT, the processing device 130 may detect if a difference D, d between the inside average temperature value IAT and the associated outside average temperature value OAT falls below a temperature difference threshold TDT.

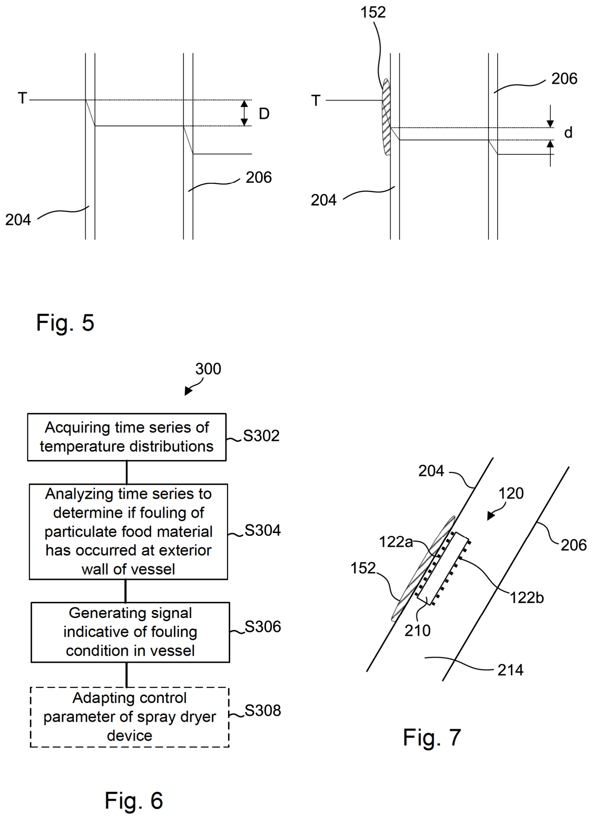

Differences D, d between the inside average temperature value IAT and the associated outside average temperature value OAT for the temperature distributions pertaining to the temperatures of 55,7, 58,0, 65,0, 67,8 and 72,9 respectively for the gas exiting the vessel 202 through the gas outlet AO of the vessel 202 are plotted in Fig. 4b. More specifically, the difference between the inside average temperature value IAT and the associated outside average temperature value OAT for the temperature distribution pertaining to the temperature of 72,9 is denoted D in Fig. 4d, whereas the differences between the inside average temperature value IAT and the associated outside average temperature value OAT for the temperature distributions pertaining to the temperatures of 55,7, 58,0, 65,0 and 67,8 are denoted d in Fig. 4d. The choice of the indications D versus d will be described below while referring to Fig. 5. As is clear form Fig 4b, the difference D, d between the inside average temperature value IAT and the associated outside average temperature value OAT for a temperature distribution decreases as the temperature of the gas exiting the vessel 202 through the gas outlet AO of the vessel 202 decreases. In other words, the difference D, d between the inside average temperature value IAT and the associated outside average temperature value OAT for a temperature distribution decreases as the moisture level in the produced powder 150 increases. In yet other words, the difference D, d between the inside average temperature value IAT and the associated outside average temperature value OAT for a temperature distribution decreases as fouling 152 of the particulate food material 150 occurs at the inside of the exterior wall 204 of the vessel 202.

As have been described above in conjunction with Figs. 2a-2c and Figs. 3a-3c, a fouling condition is at hand in the vessel 202 when the temperature of the gas exiting the vessel 202 through the gas outlet AO is 68 degrees Celsius. As may be seen in Fig. 4b, the difference d between the inside average temperature value IAT and the associated outside average temperature value OAT when the temperature of the gas exiting the vessel 202 through the gas outlet AO is 68 degrees Celsius is about 6 degrees Celsius.

Correspondingly, as have been described above in conjunction with Figs. 2a-2c and Figs. 3a-3c, a fouling condition is not at hand in the vessel 202 when the temperature of the gas exiting the vessel 202 through the gas outlet AO is 73 degrees Celsius. As may be seen in Fig. 4b, the difference D between the inside average temperature value IAT and the associated outside average temperature value OAT when the temperature of the gas exiting the vessel 202 through the gas outlet AO is 73 degrees Celsius is about 8 degrees Celsius.

Given this, it may be sensible to set a temperature difference threshold TDT of about 7 degrees Celsius for the above described spray dryer device 200. An exemplary temperature difference threshold TDT is schematically illustrated by the hatched line at 6,8 degrees Celsius in Fig. 4b. Thus, the processing device 130 may by detecting if a difference D, d between the inside average temperature value IAT and the associated outside average temperature value OAT falls below the temperature difference threshold TDT determine if fouling 152 of the particulate food material 150 has occurred at an inside of the exterior wall 204 of the vessel 202.

Fig. 5 schematically illustrates the heat transfer through the exterior wall 204 of the spray dryer 200 with and without the influence of fouling 152. More specifically, Fig. 5 schematically illustrates the heat transfer through the exterior wall 204 and the cladding wall 206 of the spray dryer 200 of Fig. 1 with and without the influence of fouling 152.

Fig. 5 clearly illustrates why the difference D, d between the inside average temperature value IAT and the associated outside average temperature value OAT for a temperature distribution decreases as fouling 152 of the particulate food material 150 occurs at the inside of the exterior wall 204 of the vessel 202.

As schematically illustrated in the left hand side illustration of Fig. 5, when no fouling 152 has occurred at the inside of the exterior wall 204 of the vessel 202, the temperature drop from the inside temperature T of the vessel 202 over the exterior wall 204 will amount to the difference D between the inside and the outside of the exterior wall 204. Hence, the indication D in Fig, 4b represents a situation where no or only insignificant fouling 152 has occurred.

On the other hand, as schematically illustrated in the right hand side illustration of Fig. 5, when fouling 152 has occurred at the inside of the exterior wall 204 of the vessel 202, the temperature drop from the inside temperature T of the vessel 202 over the exterior wall 204 will amount to the difference d between the inside and the outside of the exterior wall 204. Thus, when fouling 152 has occurred at the inside of the exterior wall 204 of the vessel 202 the temperature difference d between the inside and the outside of the exterior wall 204 will become smaller. This is due to the fact that the fouling 152 will act as a thermal insulator over which the temperature decreases, i.e. as illustrated in the right hand side illustration of Fig. 5. Thus, the thicker the fouling 152 gets, the smaller will the difference d between the inside and the outside of the exterior wall 204 become. Hence, the indication d in Fig, 4b represents situations where fouling 152 of different thicknesses or magnitudes have occurred.

The Applicant has further realized that an efficient way to detect a fouling condition in the vessel 202 is to detect if a difference D, d between any one of a plurality of inside average temperature values IAT and associated outside average temperature values OAT falls below a temperature difference threshold. Also in this regard, a first subset 122a of the temperature sensing elements 122 is to be arranged on an inside of the exterior wall 204, and a second subset 122b of the temperature sensing elements 122 is to be arranged on the outside of the exterior wall 204, i.e. as illustrated in Fig. 1 when considering the enlarged views of Fig. 1 jointly. Thus, in accordance with an approach, the processing device 130 may be configured to analyze the time series of temperature distributions to determine if fouling 152 of the particulate food material 150 has occurred at an inside of the exterior wall 204 of the vessel 202 according to the following.

Subsequent to acquiring the time series of temperature distributions from the temperature sensor arrangement 120, the processing device 130 may determine, for each temperature distribution, from temperature readings pertaining to the first subset 122a (inside of the exterior wall 204) of the temperature sensing elements 122, an inside average temperature value IAT. Correspondingly, the processing device 130 may determine, for each temperature distribution, from temperature readings pertaining to the second subset 122b (outside of the exterior wall 204) of the temperature sensing elements 122 an associated outside average temperature value OAT. In this regard, reference is also made to Fig. 4a since Fig. 4a may equally well represent inside average temperature values IAT and associated outside average temperature values OAT for any one of the temperature distributions of the time series of temperature distributions.

Subsequent to determining for each temperature distribution, an inside average temperature value IAT and an associated outside average temperature value OAT, the processing device 130 may detect if any difference D, d between any one of the inside average temperature values IAT and an associated outside average temperature value OAT falls below a temperature difference threshold TDT. In this regard, reference is also made to Fig. 4b since Fig. 4b may equally well represent differences D, d between the inside average temperature value IAT and the associated outside average temperature value OAT for the temperature distributions pertaining to the temperatures of 55,7, 58,0, 65,0, 67,8 and 72,9 respectively for the gas exiting the vessel 202 through the gas outlet AO of the vessel 202 for any one of the temperature distributions of the time series of temperature distributions.

The Applicant has further realized that an efficient way to detect a fouling condition in the vessel 202 is to acquire an outlet temperature reading from the outlet temperature sensor 110 of the spray dryer 200 and detecting if a difference between an average temperature value AT of a temperature distribution and the outlet temperature reading falls below an outlet temperature difference threshold. Thus, in accordance with an approach, the processing device 130 is further configured to, for a temperature distribution, acquire an outlet temperature reading from the outlet temperature sensor 110 associated with the temperature distribution. In other words, a single outlet temperature reading from the outlet temperature sensor 110 may be acquired for a single temperature distribution of the temperature sensor arrangement 120. In practice, an outlet temperature reading from the outlet temperature sensor 110 may be acquired simultaneously as a temperature distribution of the temperature sensor arrangement 120.

Further, according to this approach, the processing device 130 may be configured to analyze the time series of temperature distributions to determine if fouling 152 of the particulate food material 150 has occurred at an inside of the exterior wall 204 of the vessel 202 according to the following.

Subsequent to acquiring the time series of temperature distributions from the temperature sensor arrangement 120 and the outlet temperature reading from the outlet temperature sensor 110 the processing device 130 may determine for the temperature distribution associated with the outlet temperature reading an average temperature value AT. Thus, a single average temperature value AT may be calculated for the single temperature distribution associated with the outlet temperature reading from the outlet temperature sensor 110.

Subsequent to determining the average temperature value AT, the processing device 130 may detect if a difference between the average temperature value AT and the associated outlet temperature reading falls below an outlet temperature difference threshold. Also in this regard, a decreased difference in the average temperature value AT and the associated outlet temperature reading is indictive of a fouling condition in the vessel 202.

The Applicant has further realized that an efficient way to detect a fouling condition in the vessel 202 is to acquire a respective outlet temperature reading from the outlet temperature sensor 110 for each temperature distribution and detecting if a difference between any one of average temperature values AT of the respective temperature distributions and associated outlet temperature reading falls below an outlet temperature difference threshold. Thus, in accordance with an approach, the processing device 130 is further configured to, for each temperature distribution, acquire an outlet temperature reading from the outlet temperature sensor 110 associated with the temperature distribution. In other words, an outlet temperature reading from the outlet temperature sensor 110 may be acquired for each on of the temperature distributions of the temperature sensor arrangement 120. In practice, a respective outlet temperature reading from the outlet temperature sensor 110 may be acquired simultaneously as the temperature distributions of the temperature sensor arrangement 120.

Further, according to this approach, the processing device 130 may be configured to analyze the time series of temperature distributions to determine if fouling 152 of the particulate food material 150 has occurred at an inside of the exterior wall 204 of the vessel 202 according to the following.

Subsequent to acquiring the time series of temperature distributions from the temperature sensor arrangement 120 and the outlet temperature readings from the outlet temperature sensor 110 the processing device 130 may determine, from the time series of temperature distributions, for each temperature distribution a respective average temperature value AT. Thus, an average temperature value AT may be calculated for each temperature distribution associated with a respective outlet temperature reading from the outlet temperature sensor 110.

Subsequent to determining the average temperature values AT, the processing device 130 may detect if a difference between any one of the average temperature values AT and a respective associated outlet temperature reading falls below an outlet temperature difference threshold. Also in this regard, a decreased difference in the average temperature value AT and the associated outlet temperature reading is indictive of a fouling condition in the vessel 202.

In practice, the processing device 130 of Fig. 1 is configured to generate a signal indicative of a fouling condition in the vessel 202 in response to determining that fouling 152 has occurred. Thus, in all the approaches described above, the processing device 130 may be configured to in response to determining that fouling 152 has occurred, generate a signal indicative of a fouling condition in the vessel 202. To this end, the processing device 130 may be configured to generate any type of signal, machine and/or human comprehensible. For instance, the signal may include triggering an alarm, e.g. visual or audible signal, to alert an operator. For instance, the signal may alert a control system used to control the spray dryer device 200 and/or fluid bed device 100.

Further, the processing device 130 may be further configured to adapt a control parameter of the spray dryer device 200 in response to receiving such signal. In this regard, according to an example, a gas flow into the gas inlet Al may be adjusted to correct the temperature in the vessel 202. According to another example, temperature settings of heating elements may be adjusted to maintain optimal processing conditions in the vessel 202. According to another example, the feed rate of liquid food material 140 into the spray nozzle 208 may be adapted to ensure consistent material flow of the liquid food material 140 into the vessel 202.

Above, it has been explained that it is possible to determine if fouling 152 of the particulate food material 150 has occurred at an inside of the exterior wall 204 of the vessel 202 of the spray dryer 200 in many different ways by acquiring a time series of temperature distributions from the temperature sensor arrangement 120 of the spray dryer 200 and analyzing the time series of temperature distributions.

Now turning to Fig. 6. Fig. 6 is a flowchart of a method 300 for monitoring a spray dryer 200. The spray dryer device 200 comprises a vessel 202. A spray nozzle 208 is arranged in the vessel 202 and configured spray the liquid food material 140 into the vessel 202 thereby forming a stream of liquid droplets 141 of the liquid food material 140. A gas inlet Al is configured to supply heated gas to the vessel 202 to, from the stream of liquid droplets 141, form a particulate food material 150 by drying the liquid droplets 141. A temperature sensor arrangement 120 is arranged at an exterior wall 204 of the vessel 202. The temperature sensor arrangement 120 comprises a set of spatially distributed temperature sensing elements 122 configured to sense a spatial temperature distribution at the exterior wall 204.

The method 300 starts by acquiring S302, by a processing device 130, a time series of temperature distributions from the temperature sensor arrangement 120.

The method 300 proceeds by analyzing S304, by the processing device 130, the time series of temperature distributions to determine if fouling 152 of the particulate food material 150 has occurred at an inside of the exterior wall 204 of the vessel 202.

The method 300 proceeds by, in response to the processing device 130 detecting that fouling 152 has occurred, generating S306, by the processing device 130, a signal indicative of a fouling condition in the vessel 202.

The method 300 may optionally proceed by, adapting S308, by the processing device 130, a control parameter of the spray dryer device 200 in response to receiving the signal.

Thus, by the method 300, a spray dryer device 200 of the above described kind may be monitored.

With reference to Fig. 7, an embodiment of a sensor configuration is shown. This configuration is an addition to, or an alternative to, the previously described embodiments. It operates on the same physical principle as explained in connection with Fig. 5, namely that fouling increases thermal resistance at the vessel interior and thereby reduces a measurable temperature drop across the wall system used for detection.

In the embodiment, the temperature sensor arrangement 120 comprises a first array of temperature sensing elements 122a and a second array of temperature sensing elements 122b. The arrays 122a and 122b are separated from each other by a separation element 210.

The first array 122a is arranged at the outside of the exterior wall 204 and is thus closest to the exterior wall 204. The first array 122a may be in direct contact with the exterior wall 204, or a structure or interface layer 216 may be arranged between the exterior wall 204 and the first array 122a, where the structure or interface layer 216 may be configured as an adhesive, a mounting tape, a shim, or a heat-transfer medium.

The second array 122b is located on the other side of the separation element 210, i.e. on the side of the separation element 210 that is opposite the first array 122a.

The temperature sensor arrangement 120 may, in the illustrated embodiment, be mounted between the exterior wall 204 and the cladding wall 206, in an interspace 214 formed therebetween. The interspace 214 may form an air gap that acts as an insulation layer 212. The insulation layer 212 can include mineral wool or another thermal insulation material.

The separation element 210 may have a known thickness and/or a known thermal conductivity, and may comprise a metallic material such as stainless steel or a polymeric material. The separation element 210 may be mounted by mechanical stand-offs or brackets to define the interspace 214 and to maintain a stable and repeatable thermal resistance. At least one of the arrays 122a, 122b may comprise fiber Bragg gratings 124; alternatively or additionally, RTDs, thermocouples, or distributed optical temperature sensing can be used. The arrays can follow linear, helical, ring-shaped or meandering paths to provide zone-wise coverage.

The processing device 130 is configured to acquire temperature readings from both arrays 122a, 122b and to determine one or more temperature differences indicative of fouling 152. In particular, the separation element 210 enables the processing device 130 to define a temperature-difference indicator that corresponds to the difference D described with Fig. 5, but measured within the sensor sandwich of Fig. 7. The indicator may be obtained as:
a) a temperature difference across the separation element 210 between its inner and outer faces; and/or
b) a temperature difference between the outside of the exterior wall 204 and the inner face of the separation element 210.

Under non-fouling conditions, the temperature-difference indicator measured with the separation element 210 is relatively large, analogous to D across the exterior wall 204 in Fig. 5. As deposits 152 form and add thermal resistance at the vessel interior, the local heat transfer decreases and the measured temperature-difference indicator in Fig. 7 correspondingly decreases, analogous to the reduction from D to d shown in Fig. 5. Detection of fouling may thus be performed when a difference threshold is crossed for any of the temperature-difference indicators derived using the separation element 210, in the same manner as for the threshold applied to D and d in connection with Fig. 5. Thresholds may be set by calibration using water runs and steady-state product runs, and may be zone-specific.

In some embodiments, the processing device 130 derives a local heat-transfer indicator that is proportional to a measured temperature difference divided by a thermal resistance of the separation element 210 and/or of any layer present in the interspace 214. In other embodiments, detection is performed using the temperature-difference signal alone, which remains proportional to local heat transfer under constant wall properties. When an air gap or insulation layer 212 is present, the processing device 130 may apply a compensation or calibration for the associated thermal resistance when evaluating the detection signals.

The configuration with the separation element 210 avoids direct contact between temperature sensing elements 122 and the particulate material 150 present inside the vessel 202, thereby simplifying installation and cleaning while maintaining fouling detection performance. The processing device 130 may apply statistical temporal-variation analysis to the temperature-difference signals as well as to temperature readings from the inside and the outside of the exterior wall 204. The temporal-variation analysis may comprise at least one of standard deviation, variance, variation in rate, variation in magnitude, variation in frequency, pattern-wise variation, trend-wise variation, volatility, or anomaly in temperature change. The processing device 130 may trigger graded alarms and/or control actions in response to detected conditions.

From the description above follows that, although various embodiments of the invention have been described and shown, the invention is not restricted thereto but may also be embodied in other ways within the scope of the subject-matter defined in the following claims.

## Claims

1. A spray dryer device (200) for drying a liquid material (140) comprising:
a vessel (202),
a spray nozzle (208) arranged in the vessel (202) and configured spray the liquid material (140) into the vessel (202) thereby forming a stream of liquid droplets (141) of the liquid material (140),
a gas inlet (AI) configured to supply heated gas to the vessel (202) to, from the stream of liquid droplets (141), form a particulate material (150) by drying the liquid droplets (141),
a temperature sensor arrangement (120) arranged at an exterior wall (204) of the vessel (202), the temperature sensor arrangement (120) comprising a set of spatially distributed temperature sensing elements (122) configured to sense a spatial temperature distribution at the exterior wall (204), and
a processing device (130) configured to;
acquire a time series of temperature distributions from the temperature sensor arrangement (120),
analyze the time series of temperature distributions to determine if fouling (152) of the particulate material (150) has occurred at an inside of the exterior wall (204) of the vessel (202), and
in response to determining that fouling (152) has occurred, generate a signal indicative of a fouling condition in the vessel (202).

2. The spray dryer device (200) according to claim 1, wherein the processing device (130) is configured to analyze the time series of temperature distributions to determine if fouling (152) of the particulate material (150) has occurred at an inside of the exterior wall (204) of the vessel (202) by;
determining, from the time series of temperature distributions, for each temperature sensing element (122), a local temporal variation of the temperature readings of the respective temperature sensing element (122), and
detecting whether any one of the local temporal variations falls below a local temperature variation threshold.

3. The spray dryer device (200) according to claim 1, wherein the processing device (130) is configured to analyze the time series of temperature distributions to determine if fouling (152) of the particulate material (150) has occurred at an inside of the exterior wall (204) of the vessel (202) by;
determining, from the time series of temperature distributions, for each temperature distribution an average temperature value (AT),
determining a global temporal variation of the average temperature values (AT), and
detecting if the global temporal variation of the average temperature values (AT) falls below an average temperature variation threshold.

4. The spray dryer device (200) according to claim 2 or 3, wherein the local temporal variation and/or the global temporal variation comprises a standard deviation, a variance, a variation in rate, a variation in magnitude, a variation in frequency, a pattern-wise variation, a trend-wise variation, a volatility or an anomaly in temperature change.

5. The spray dryer device (200) according to claim 1, wherein a first subset (122a) of the temperature sensing elements (122) are arranged on an inside of the exterior wall (204), and wherein a second subset (122b) of the temperature sensing elements (122) are arranged on an outside of the exterior wall (204).

6. The spray dryer device (200) according to claim 5, wherein the processing device (130) is configured to analyze the time series of temperature distributions to determine if fouling (152) of the particulate material (150) has occurred at an inside of the exterior wall (204) of the vessel (202) by;
determining, for a temperature distribution, from temperature readings pertaining to the first subset (122a) of the temperature sensing elements (122), an inside average temperature value (IAT), and from temperature readings pertaining to the second subset (122b) of the temperature sensing elements (122), an associated outside average temperature value (OAT), and
detecting if a difference (D, d) between the inside average temperature value (IAT) and the associated outside average temperature value (OAT) falls below a temperature difference threshold (TDT).

7. The spray dryer device (200) according to claim 5, wherein the processing device (130) is configured to analyze the time series of temperature distributions to determine if fouling (152) of the particulate material (150) has occurred at an inside of the exterior wall (204) of the vessel (202) by;
determining, for each temperature distribution, from temperature readings pertaining to the first subset (122a) of the temperature sensing elements (122), an inside average temperature value (IAT), and from temperature readings pertaining to the second subset (122b) of the temperature sensing elements (122) an associated outside average temperature value (OAT), and
detecting if any difference (D, d) between any one of the inside average temperature values (IAT) and an associated outside average temperature value (OAT) falls below a temperature difference threshold (TDT).

8. The spray dryer device (200) according to claim 1, wherein the spray dryer device (200) further comprises an outlet temperature sensor (110) arranged at a gas outlet (AO) of the vessel (202), the outlet temperature sensor (110) being configured to sense a temperature of gas exiting the vessel (202) via the gas outlet (AO).

9. The spray dryer device (200) according to claim 8, wherein the processing device (130) is further configured to, for a temperature distribution, acquire an outlet temperature reading from the outlet temperature sensor (110) associated with the temperature distribution, and
wherein the processing device (130) is configured to analyze the time series of temperature distributions to determine if fouling (152) of the particulate material (150) has occurred at an inside of the exterior wall (204) of the vessel (202) by;
determining for the temperature distribution associated with the outlet temperature reading an average temperature value (AT), and
detecting if a difference between the average temperature value (AT) and the associated outlet temperature reading falls below an outlet temperature difference threshold.

10. The spray dryer device (200) according to claim 8, wherein the processing device (130) is further configured to, for each temperature distribution, acquire an outlet temperature reading from the outlet temperature sensor (110) associated with the temperature distribution, and
wherein the processing device (130) is configured to analyze the time series of temperature distributions to determine if fouling (152) of the particulate material (150) has occurred at an inside of the exterior wall (204) of the vessel (202) by;
determining, from the time series of temperature distributions, for each temperature distribution a respective average temperature value (AT), and
detecting if a difference between any one of the average temperature values (AT) and a respective associated outlet temperature reading falls below an outlet temperature difference threshold.

11. The spray dryer device (200) according to any one of the preceding claims, wherein the temperature sensor arrangement (120) comprises a fiber Bragg grating (124).

12. The spray dryer device (200) according to any one of the preceding claims, wherein the temperature sensor arrangement (120) comprises a first fiber Bragg grating (124) extending along a first path at an inside of the exterior wall (204) and a second fiber Bragg grating (124) extending along a second path at an outside of the exterior wall (204).

13. The spray dryer device (200) according to any one of the preceding claims, wherein the processing device (130) is further configured to adapt a control parameter of the spray dryer device (200) in response to receiving the signal.

14. A method (300) for monitoring a spray dryer device (200), the spray dryer device (200) comprising: a vessel (202), a spray nozzle (208) arranged in the vessel (202) and configured spray the liquid material (140) into the vessel (202) thereby forming a stream of liquid droplets (141) of the liquid material (140), a gas inlet (AI) configured to supply heated gas to the vessel (202) to, from the stream of liquid droplets (141), form a particulate material (150) by drying the liquid droplets (141), and a temperature sensor arrangement (120) arranged at an exterior wall (204) of the vessel (202), the temperature sensor arrangement (120) comprising a set of spatially distributed temperature sensing elements (122) configured to sense a spatial temperature distribution at the exterior wall (204), the method (300) comprising:
acquiring (S302), by a processing device (130), a time series of temperature distributions from the temperature sensor arrangement (120),
analyzing (S304), by the processing device (130), the time series of temperature distributions to determine if fouling (152) of the particulate material (150) has occurred at an inside of the exterior wall (204) of the vessel (202), and
in response to the processing device (130) detecting that fouling (152) has occurred, generating (S306), by the processing device (130), a signal indicative of a fouling condition in the vessel (202).

15. The method (300) according to claim 14, further comprising adapting (S308), by the processing device (130), a control parameter of the spray dryer device (200) in response to receiving the signal.
